# EUROPÄISCHE PATENTANMELDUNG

(11) **EP 4 197 625 A1**
(43) Veröffentlichungstag der Anmeldung: **21.06.2023**
(21) Anmeldenummer: 21214295.4
(22) Anmeldetag: 14.12.2021
(51) Int. Cl.: B01D 63/08, B01J 19/24

(54) **MEMBRANREAKTOR**

(71) Anmelder: hte GmbH, 69123 Heidelberg (DE)
(72) Erfinder: SCHUNK,Stephan A., 69123 Heidelberg (DE); JEVTOVIKJ, Ivana, 69123 Heidelberg (DE); FRITSCH, Charlotte, 69123 Heidelberg (DE); DUSSOL, Damien, 69124 Heidelberg (DE); BRENNER, Armin, 69123 Heidelberg (DE); KEIM, Sebastian David Alexander, 67056 Ludwigshafen am Rhein (DE)
(74) Vertreter: BASF IP Association

(57) **Zusammenfassung**

Membranreaktor für Durchflussreaktionen, umfassend:
(a) zwei Blöcke (4, 5) mit Fluidkammern, die jeweils zumindest eine Fluidzufuhrleitung (1, 10) und zumindest eine Fluidabfuhrleitung (2, 9, 11, 15) aufweisen;
(b) ein Zwischenelement (6), welches einen planaren Träger und eine Membran umfasst, die in der Mitte des Trägers angeordnet ist oder die auf dem Träger angeordnet sind, im Fall, dass mehrere Membranen vorliegen;
(c) eine Anpressvorrichtung (3, 14),
wobei das Zwischenelement mit Dichtungen (5, 7) versehen ist und zwischen den Fluidkammern der Blöcken angeordnet ist, die mit der Anpressvorrichtung fixiert sind, und wobei der Membranreaktor dadurch gekennzeichnet ist, dass dieser entweder Fluidkammern mit einer Vielzahl von Fluidleitungen aufweist, vorzugsweise ist die Anzahl an Fluidleitungen ≥ 4, oder dass dieser zumindest ein Verteilerelement aufweist, wobei das oder die Verteilerelemente in den Fluidkammern, jeweils zwischen einem Block und dem Zwischenelement angeordnet sind und aus der Gruppe Kanalstrukturelement, Strömungsbrecher oder Mikrostrukturelement ausgewählt sind und jede Fluidkammer mit zumindest zwei Fluidleitungen verbunden ist.

## Beschreibung

Die Erfindung betrifft einen Membranreaktor für Durchflussreaktionen, der modular aufgebaut ist und der eine variable und flexible Betriebsweise ermöglicht.

Membranverfahren bieten ein großes Potential zur Verbesserung von technischen Prozessen. Mittels Membranverfahren lassen sich chemische Gleichgewichte gezielt beeinflussen, so dass es möglich ist, die Wirtschaftlichkeit von Prozessen zu verbessern. Ein Ziel ist es, die Prozesse bei einem geringeren Energieaufwand gegenüber herkömmlichen Prozessen durchzuführen, welche ohne Einsatz von Membranen betrieben werden. Weitere Ziele der Nutzung von Membranverfahren sind die integrierte Co-Generation und Separation von Wertprodukten, und zwar insbesondere in einer Reihe von petrochemischen Verfahren. In Betracht kommt die Anreicherung oder Entfernung von Stoffen mittels Membranen, wie beispielsweise co-generierter Wasserstoff und Sauerstoff. Somit besteht ein großes Interesse an der Erforschung und der Entwicklung von Membranen und Membranmaterialien, sowie deren Kopplung mit geeigneten Katalysatoren, welche einerseits die chemischen Anforderungen bezüglich einer bestimmten Prozesstechnologie erfüllen und andererseits eine ausreichende Langzeitstabilität aufweisen, um einen störungsfreien Betrieb des Prozesses zu gewährleisten. In diesem Kontext ist die Messung von Daten, die die Bestimmung von Global- und Mikrokinetik von Membran-unterstützten Reaktionen erlauben, von fundamentaler Bedeutung. Die Entwicklung geeigneter Reaktoren, die eine Messung und Bestimmung solcher Daten erlauben, bildet eine Basis hierfür.

Im Stand der Technik sind eine Vielzahl von Veröffentlichungen zur Untersuchung von Membranen und zur Durchführung von Membranprozessen zu finden.

Anhand der nachfolgenden Darstellung wird eine kurze Übersicht zum Stand der Technik auf dem Gebiet von Membranreaktoren gegeben.

Eine Vielzahl von Vorrichtungen und Verfahren zur Untersuchung von Membranen bekannt. Die zur Untersuchung von Membranen eingesetzten Membranreaktoren lassen sich dahingehend unterscheiden, dass diese für die Untersuchung von rohrförmigen Membranen oder von scheibenförmigen Membranen eingesetzt werden.

Die für die Untersuchung von Membranen eingesetzten Vorrichtungen sind teilweise auch kommerziell erhältlich. Als Hersteller für Vorrichtungen zur Testung von Membranen sind beispielsweise die Firma NORECS AS (Oslo, Norwegen) zu nennen. Die Firma NORECS AS vertreibt unter dem Namen System ProboSat eine Vorrichtung, mit der Membranen bei Temperaturen von bis zu 1600 °C unter kontrollierten Bedingungen untersucht werden können.

Ein anderer Hersteller einer Testvorrichtung für Membranen ist die Firma Pfeiffer Vaccuums (Asslar, Deutschland), die eine Vorrichtung zur Testung von Kunststoffmembranen anbietet, welche mittels Folienguss hergestellt wurden. Bei der Untersuchung der Membranen wird die eine Seite der Membrankammer unter Unterdruck gesetzt, wobei die Testungen der Membranen bei Raumtemperatur und geringen Drücken durchgeführt werden.

Von großer Bedeutung ist die Untersuchung von Untersuchung von gemischten ionisch-elektronisch leitfähigen Membranen, bei denen Sauerstoff und Elektronen durch die Membranschicht transportiert werden.

Ein Übersichtsartikel zur Untersuchung von gemischten ionisch-elektronisch leitfähige Membranen wird von Alba Arratibel Plazaola et al. in Processes 2019, 7, 128, S. 1 - 50 gegeben (siehe doi:10.3390/pr7030128). Gemischte ionisch-elektronisch leitfähige Membranen werden auch als "Mixed lonic-Electronic Conducting Membranes" bezeichnet, was mit MIEC abgekürzt wird.

Sonia Escolástico et al beschreiben die Entwicklung und die Funktionstestung für eine metallischen Membranreaktor, mit dem gemischte ionisch-elektronisch leitfähige Membranen bei Temperaturen bis 1200 °C untersucht werden (siehe Membranes 2021, 11(7), 541, S. 1 - 12; https://doi.org/10.3390/membranes11070541). Membranreaktor zur Untersuchung von Membranen).

Ein wirtschaftlich wichtiger Bereich von Membranprozessen ist auch durch die selektive Abtrennung von Wasserstoff in Baugruppen und wasserstofferzeugenden Systemen, die zur Herstellung von Brenngasen beim Betrieb von Brennstoffzellensystemen eingesetzt werden.

In der US-A-102010/0253356 (von Chun-Huang Tsai et al.) wird eine Vorrichtung zur Untersuchung der elektrischen Eigenschaften von Festoxid-Brennstoffzellen beschrieben, mit der scheibenförmige Festoxid-Brennstoffzellen vermessen werden. Die zur Untersuchung vorgesehenen Festoxid-Brennstoffzellen werden zwischen Elementen zur Spannungsaufnahme mittels mehrerer Federn und Anpressvorrichtung am oberen Ende eines zylinderförmigen Innenrohrs fixiert, das von einem zylinderförmigen Außenrohr eingefasst ist.

H. R. Godini et als beschreiben ein Verfahren zur oxidativen Methankupplung, das auf einem Netzwerk aus gekoppelten Reaktoren basiert (siehe dx.doi.org/10.1021/ie202877r | Ind. Eng. Chem. Res. 2012, 51, 7747-7761). Bei dem Verfahren werden Rohrreaktoren und rohrförmige Membranen in Form von ringförmig angeordneten Katalysatorbetten eingesetzt.

In der WO-A 2020/141246 wird ein mehrstufiges Verfahren zur Aufarbeitung von Industrieabgasen beschrieben.

Der vorliegenden Erfindung liegt die Aufgabe zugrunde, eine Vorrichtung zur Untersuchung von Membranen bereitzustellen, die modular aufgebaut ist und die eine Untersuchung von Membranen und unterschiedlichen Membranprozessen erlaubt.

Die hier genannte Aufgabe wird dadurch gelöst durch die Bereitstellung eines Membranreaktor für Durchflussreaktionen, der die nachfolgend genannten Elemente umfasst:
(a) zwei Blöcke mit Fluidkammern, die jeweils zumindest eine Fluidzufuhrleitung und zumindest eine Fluidabfuhrleitung aufweisen;
(b) ein Zwischenelement, welches einen planaren Träger und zumindest eine Membran umfasst, die in der Mitte des Trägers angeordnet ist oder die auf dem Träger angeordnet sind, im Fall, dass mehrere Membranen vorliegen;
(c) eine Anpressvorrichtung,
wobei das Zwischenelement mit Dichtungen versehen ist und zwischen den Fluidkammern der Blöcken angeordnet ist, die mit der Anpressvorrichtung fixiert sind, und wobei der Membranreaktor dadurch gekennzeichnet ist, dass dieser entweder Fluidkammern mit einer Vielzahl von Fluidleitungen aufweist, vorzugsweise ist die Anzahl an Fluidleitungen ≥ 4, oder dass dieser zumindest ein Verteilerelement aufweist, wobei das oder die Verteilerelemente in den Fluidkammern, jeweils zwischen einem Block und dem Zwischenelement, angeordnet sind und aus der Gruppe Kanalstrukturelement, Strömungsbrecher oder Mikrostrukturelement ausgewählt sind und jede Fluidkammer mit zumindest zwei Fluidleitungen verbunden ist.

Vorzugsweise weisen die beiden Blöcke des Membranreaktors eine strukturelle Ähnlichkeit auf, wobei es noch weiter bevorzugt, dass die beiden Blöcke des Membranreaktors identisch aufgebaut sind. Der modulare Aufbau der einzelnen Einheiten des Membranreaktors ist vorteilhaft, da dieser einfach zusammengesetzt und auseinandergebaut werden kann. Dadurch lassen sich das Zwischenelement mit dem planaren Träger und der darin befestigten Membran in einfacher Weise austauschen. Die zwei Dichtungen dichten den planaren Träger, der die Fluidkammern begrenzt, jeweils auf der Oberseite und der Unterseite ab, so dass ein Stoffaustausch auf den Bereich der Membran limitiert ist. Ein Vorteil der Dichtungen ist, dass diese flexibel und unter Druck mechanisch verformbar sind. Aufgrund von thermischen oder chemischen Einflüssen können sich der planare Träger oder die Membran ausdehnen, wobei die Ausdehnung des Trägers gegenüber der Ausdehnung der beiden Blöcke unterschiedlich sein kann. Die Unterschiede bei der Ausdehnung können beispielsweise dadurch verursacht werden, dass die Blöcke gegenüber dem Träger und der Membran eine unterschiedliche Materialzusammensetzung aufweisen können. Der erfindungsgemäße Membranreaktor bietet den Vorteil, dass das unterschiedliche Ausdehnungsverhalten der Elemente kompensiert wird, da die Abdichtung der Membran von der Abdichtung der Blöcke entkoppelt ist. Im Falle einer flexiblen Dichtung und bei Temperaturanwendungen im Bereich von unter 300 °C können die Dichtungen auch ein Zusammenziehen beziehungsweise eine Kontraktion des Zwischenelements ausgleichen.

Die Anordnung auf der Basis des Zwischenelements mit dem planaren Träger und der darin befestigten Membran sind vorteilhaft, da die Membran durch den planaren Träger mechanisch stabilisiert wird und dadurch einer hohen Druckbelastung widerstehen kann.

In einer weiteren Ausführungsform erfindungsgemäßen Membranreaktors liegt der Membranreaktor ohne Verteilerelemente vor, wobei die für die Verteilerelemente vorgesehenen Bereiche Kammern (oder Fluidkammern) bilden, die vorzugsweise plattenförmige Form aufweisen, die mit drei oder mehr Fluidleitungen verbunden sind, wobei es sich um Fluidzufuhr- und Fluidabfuhrleitungen handelt und wobei es bevorzugt ist, dass die Anzahl an Fluidleitungen ≥ 4, weiter vorzugsweise ≥ 5, ist. Das Besondere an dieser Ausführungsform des Membranreaktors ohne die Verteilerelemente ist, dass durch das Weglassen der Verteilerelemente die Fluidkammern vorliegen, die vorzugsweise einen plattenförmigen Raum bilden, der hier Fluidkammer bezeichnet wird, wobei jede Fluidkammer mit einer Vielzahl von Fluidleitungen verbunden ist. Die Anzahl an Fluidleitungen bezieht sich jeweils auf eine einzelne Fluidkammer.

In einer bevorzugten Ausführungsform weist der Membranreaktor zentrosymmetrische Form auf, darüber hinaus bevorzugt weisen die Fluidkammern des Membranreaktors eine kreisförmige Form auf. In einer bevorzugten Ausführungsform sind eine Pluralität von Fluidabfuhrleitungen kreisförmig im äußeren Bereich der Fluidkammer um zumindest eine Fluidzufuhrleitung angeordnet, die mit dem Zentrum der Fluidkammer verbunden ist. In dieser Ausführungsform ist die Anzahl der Fluidabfuhrleitungen größer als die Anzahl der Fluidzufuhrleitung, wobei die Anzahl der Fluidabfuhrleitungen ≥ 3 ist, weiter bevorzugt ist die Anzahl der Fluidabfuhrleitungen ≥ 4. In einer weiteren Ausführungsform, die ebenso bevorzugt ist, sind die Fluidzufuhrleitungen kreisförmig im äußeren Bereich der Fluidkammer verbunden, die um das mindestens eine mit dem Zentrum der Fluidkammer verbundene Fluidabfuhrleitung angeordnet sind; wobei die Anzahl der Fluidzufuhrleitungen ist größer als die Anzahl der Fluidabfuhrleitungen und wobei die Anzahl der Fluidzufuhrleitungen ≥ 3 ist, vorzugsweise ist die Anzahl der Fluidzufuhrleitungen ≥ 4. Die hier beschriebene Ausführung des Membranreaktors mit den Fluidkammern in der dargestellten Kombination mit Fluidzufuhr- und Fluidabfuhrleitungen sind vorteilhaft, da eine besonders gute Durchmischung von Gasen im Innenraum der Fluidkammern ermöglicht wird. Aufgrund der zentrosymmetrischen Form kann die Strömungsverteilung ideal und ohne Gradienten geführt und Wärmeverteilung innerhalb des Membranreaktors sehr genau kontrolliert werden, was dazu führt, dass die erhaltenen Messdaten beim Betrieb des Membranreaktors von hoher Aussagekraft sind und eine hohe Reproduzierbarkeit ermöglichen. Die ideale Strömungsverteilung in den Fluidkammern und der gradientenfreie Betrieb ermöglichen eine differentielle Betriebsweise, die zur Bestimmung von Reaktionskinetiken eingesetzt werden kann. Besonders vorteilhaft ist, dass mittels der Vorrichtung und dem Verfahren kinetische Daten generiert werden können, die eine hohe Genauigkeit aufweisen. Besonders vorteilhaft ist ebenfalls, wenn die Strömungscharakteristik im Reaktor die Ausbildung einer turbulenten Strömung erlaubt.

In einer weiter bevorzugten Ausführungsform des erfindungsgemäßen Membranreaktors weist der Membranreaktor sowohl ein oder mehrere Verteilerelemente als auch eine Vielzahl von Fluidleitungen auf.

Das Zwischenelement weist einen planaren Träger auf, welcher vorzugsweise aus einem massiven Körper aufgebaut ist. Vorzugsweise umfasst der planare Träger ein Material aus der Gruppe Metall, Keramik, Kohlenstoff, Graphit, hochkristalliner Graphit. Vorzugsweise ist die äußere Form des Zwischenelements und somit auch die Form des planaren Trägers zentrosymmetrisch ausgestaltet, ganz besonders bevorzugt weist der planare Träger eine kreisförmige Form auf.

Die in den in den Fluidkammern angeordnete Verteilerelemente aus der Gruppe Kanal, Strömungsbrecher oder Mikrostruktur dienen dazu, die Strömungscharakteristika in der Fluidkammer einzustellen.

In einer bevorzugten Ausführungsform weist der Membranreaktor Verteilerelemente auf, die in Form von Verteilerstrukturelementen vorliegen und die als separate Elemente vorliegen, wobei das eine Verteilerstrukturelement in der Fluidkammer des ersten Blocks und der Fluidkammer des zweiten Blocks angeordnete sind.

Durch die einzelnen Elemente lässt sich die Strömung des Gases jeder einzelnen Fluidkammer lenken. In einer bevorzugten Ausführungsform liegen Verteilerelemente als Kanäle vor, die in Verteilerstrukturelemente enthalten sind. In einer bevorzugten Ausführungsform weist der erfindungsgemäße Membranreaktor Verteilerstrukturelemente mit darin eingelassenen Kanälen auf. Ein Verteilerstrukturelement mit darin eingelassenen Kanälen wird auch als Kanalstrukturelement bezeichnet. Es kann sich um einen oder mehrere Kanäle handeln wie anhand der vorliegenden Beschreibung dargestellt wird. Mittels dieser Ausführungsform lassen sich in den Fluidkammern laminare Strömungsverhältnisse einstellen. In dieser Ausführungsform ist es bevorzugt, dass die Kontaktflächen zwischen dem Verteilerstrukturelement und der Membran mit Dichtmitteln versehen sind, um die Strömung von Gasen auf den Bereich der Kanäle zu beschränken. Bevorzugt eingesetzte Dichtmittel umfassen Filze, wie keramische Filze, die beispielsweise Alumina-Fasern enthalten, oder glasartige Lote, die unter Reaktionsbedingungen aufschmelzen und eine Dichtung ausbilden.

In einer weiteren Ausführungsform, die ebenso bevorzugt ist, liegen Verteilerelemente in Form von Strömungsbrechern vor. Weiter vorzugsweise sind die Strömungsbrecher in Form von konzentrischen Ringstrukturen oder Umlenkstrukturen ausgebildet. Die Strömungsbrecher sorgen dafür, dass sich in den Fluidräumen beim Durchleiten von Gasen turbulente Strömungszustände ausbilden. In einer bevorzugten Ausführungsform weisen die Flächen zwischen den Strömungsbrechern und der Membran einen geringfügigen Zwischenraum auf, so dass diese die Strömungsbrecher die Kontaktflächen der Membran berühren, jedoch nicht dichtend verbunden sind, oder die Kontaktflächen nicht berühren. In einer bevorzugten Ausführungsform sind mehrere Strömungsbrecher in einem Element zusammengefasst, welches Aussparungen für die Fluidzuleitungen und damit für die Zuführung der Gase aufweist. Bei den Elementen, die mit Strömungsbrechern und Verknüpfung zu Fluidleitungen versehen sind, handelt es sich im Prinzip auch um Verteilerstrukturelemente. In einer weiteren Ausführungsform sind die Verteilerelemente in die Oberfläche der Membran eingearbeitet. Die Verteilerstrukturelemente die als separate Elemente ausgeführt sein können haben den Vorteil, dass diese gegen unterschiedliche Elemente ausgetauscht werden können. Durch die unterschiedliche Anzahl an Kanälen beziehungsweise an Strömungsbrechern, die auch eine unterschiedliche Dimensionierung aufweisen können oder die unterschiedliche Anzahl an Kanälen und Strömungsbrechern als kann die Strömungscharakteristik innerhalb der Fluidkammer vorgegeben werden.

In einer weiter bevorzugten Ausführungsform bilden die Verteilerstrukturelemente Bestandteil der Blöcke und sind in die jeweiligen Fluidkammern der Blöcke eingearbeitet. Dies hat den Vorteil, dass die Fluidleitungen, die durch die Blöcke zu den Verteilerstrukturelementen geführt werden, keine zusätzlichen Dichtmittel erfordern, wie diese beim Vorliegen von separaten Verteilerstrukturelementen gegebenenfalls erforderlich sind. Die eingesetzten Dichtungen hängen jeweils auch von den Prozessparametern ab. Denkbar ist, dass bei der Ausführungsform des Membranreaktors mehrere Blöcke vorhanden sind, die austauschbar sind, so dass auch hier unterschiedliche Verteilerstrukturelemente für die Durchführung des Verfahrens eingesetzt werden können, obwohl die Verteilerstrukturelemente in die Blöcke integriert sind.

In einer bevorzugten Ausführungsform weist der planare Träger des Zwischenelements einen Durchbruch mit einer Vertiefung auf, wobei die Membran in der Vertiefung positioniert ist und wobei die Membran mit einem Dichtungsmittel abgedichtet ist, in einer bevorzugten Ausführungsform weist der planare Träger zwei oder mehr Durchbrüche mit Vertiefungen auf, in denen Membranen positioniert sind, die mit Dichtungsmitteln abgedichtet sind. In unterschiedlichen Ausführungsform ist der Träger mit zwei, drei oder vier Membranen bestückt. Die gleichzeitige Untersuchung von Membranen ist sehr vorteilhaft, um die Verfahren und den Durchsatz im Forschungsbetrieb zu beschleunigen. In Bezug auf die Ausführungsform des Membranreaktors, der mit einer Mehrzahl von Membranen bestückt ist, ist anzumerken, dass es weiterhin bevorzugt ist, wenn dieser Membranreaktor auch mit mehreren Kapillarsonden ausgestattet ist, die eine lokale Bestimmung der Fluidzusammensetzung in der Fluidkammer ermöglichen.

In einer bevorzugten Ausführungsform weist ein einzelnes Verteilerstrukturelement einen oder mehrere Fluidkanäle auf, wobei die Länge eines Fluidkanals im Bereich von 10 bis 50 mm und der Durchmesser eines Fluidkanals im Bereich von 50 bis 2000 µm liegen, weiter vorzugsweise im Bereich von 100 bis 1000 µm, darüber hinaus bevorzugt in einem Bereich von 100 bis 500 µm.

In einer bevorzugten Ausführungsform weist ein einzelnes Verteilerstrukturelement ein oder mehrere Strömungsbrecher auf, wobei die Länge eines Strömungsbrechers im Bereich von 10 bis 50 mm und der Durchmesser und die Höhe eines Strömungsbrechers im Bereich von 50 bis 2000 µm liegen, weiter vorzugsweise im Bereich von 100 bis 1000 µm, darüber hinaus bevorzugt in einem Bereich von 100 bis 500 µm.

In einer bevorzugten Ausführungsform ist der erfindungsgemäße Membranreaktor mit zwei Verteilerstrukturelementen ausgestattet, wobei die beiden Verteilerstrukturelemente je zwei Kanäle aufweisen und die Blöcke jeweils zwei Fluidabfuhrleitungen und jeweils eine Fluidzufuhrleitung aufweisen. Daraus folgt, dass die beiden Kanäle des einzelnen Verteilerstrukturelements von der gleichen Fluidzufuhrleitung versorgt werden.

In einer bevorzugten Ausführungsform weist die mit dem Träger verbundene Membran eine Mikrostruktur auf. Die Mikrostruktur der Membran ist so ausgeführt, dass sie ebenfalls vorteilhaft für den Stofftransport durch die Membran und kann gleichzeitig auch die Strömungseigenschaften des Membranreaktors beeinflussen. Membranen mit Mikrostrukturen lassen sich mittels Verfahren herstellen, die dem Fachmann bekannt sind. Zu diesen Verfahren gehören unter anderem die Mikroextrusion, der 3D-Druck, der Siebdruck oder weitere geeignete Verfahren. Geeignete keramische Mikrostrukturen können durch 3D-Druck oder Siebdruck hergestellt werden.

In einer weiteren, bevorzugten Ausführungsform liegt der erfindungsgemäße Membranreaktor in einer Form vor, bei dem ein mit Strömungsbrechern ausgestattetes Verteilerstrukturelement auch in Kombination mit einer Membran vorliegt, die Mikrostrukturelemente in der Oberfläche aufweist.

Weiter bevorzugt ist eine Ausführungsform des erfindungsgemäßen Membranreaktors, der Verteilerelemente aufweist, wobei die Verteilerelemente in der Form von Kanalstrukturelementen oder von Strömungsbrechern vorliegen. Darüber hinaus bevorzugt ist eine Ausführungsform des erfindungsgemäßen Membranreaktors, bei dem die Verteilerelemente in der Form von Kanalstrukturelementen vorliegen.

In einer weiteren Ausführungsform weist der Membranreaktor eine quadratische Außenform auf und der darin angeordneten planare Träger eine kreisrunde Form. Somit ist anzumerken, dass die äußere Form des Membranreaktors nicht die äußere Form des planaren Trägers beziehungsweise des Zwischenelements bestimmt.

In einer bevorzugten Ausgestaltung weist der planare Träger eine Durchführung im Mittelbereich auf, der so ausgelegt ist, dass dort eine Membran fixiert werden kann.

Bei der Membran handelt es sich in einer bevorzugten Ausführungsform um eine planare Scheibe, die ein oder mehreren Materialien umfasst, die schichtförmig angeordnet sind. Die Membran ist in Bezug auf einzelne Komponenten permeabel ist, wobei die Permeabilität von den gewählten Prozessparametern abhängig ist.

In einer bevorzugten Ausführungsform weist die Membran einen schichtförmigen Aufbau auf, wobei eine poröse Grundschicht enthalten ist, die ein poröses Glas, eine poröse Keramik, ein poröses Metall aufweist. Vorzugsweise umfasst die Membran zwei oder mehr Schichten. Vorzugsweise ist auf der Grundschicht mindestens eine weitere Schicht aufgetragen, wobei auf der Grundschicht aufgetragenen Schichten einphasig oder mehrphasig sind.

Bei mehrschichtig aufgebauten Membranen handelt es sich vorzugsweise um eine asymmetrische Membran, die durch eine oder mehrere Deckschichten gekennzeichnet ist, die jeweils eine einphasige oder eine mehrphasige Zusammensetzung aufweisen. Vorzugsweise umfasst die Membran zumindest eine gasdichte Deckschicht. Weiter vorzugsweise umfasst die Membran zumindest eine gasdichte Deckschicht und eine poröse Deckschicht. In einer bevorzugten Ausführungsform umfasst die poröse Deckschicht Katalysatorpartikel oder es handelt sich bei der porösen Deckschicht um eine Katalysatormembran. Darüber hinaus bevorzugt ist eine Ausführungsform der Membran, die eine Schutzschicht aufweist, die die Oberfläche der Membran gegen mechanische Beschädigung schützt.

In einer bevorzugten Ausführungsform umfasst die Grundschicht eine Fritte, und zwar vorzugsweise aus einer porösen Keramik, einem porösen Glas oder einem porösen Sintermetall. Weiterhin bevorzugt ist, dass die Membran eine Schicht aus einem aktiven Material aufweist. Bei einem aktiven Material handelt es sich beispielsweise um ein Material, das ionenleitende und elektronenleitende Eigenschaften aufweist. Weiterhin kann es sich bei einem aktiven Material um ein Material handeln, das Molekularsiebeigenschaften aufweist oder das ionisch leitend ist. Die Membran ist mit dem planaren Träger verbunden, wobei der planare Träger und die Membran das Zwischenelement bilden. Die Verbindung von Membran und planarem Träger ist mit Dichtmittel versiegelt, wobei die als Dichtmittel alle dem Fachmann bekannten Mittel verwendet werden können. Bei den mit Dichtmitteln erzeugten Verbindungen handelt es sich um Verbindungen, die aus der Gruppe Klebeverbindung, Schweißverbindung, Lötverbindung, Sinterverbindung ausgewählt sind. Vorzugsweise handelt es sich bei dem Dichtmittel um glasartige Lote, silikatische Gläser, borathaltige Gläser. Ein Beispiel für ein Glaslot, das gute Eignung als Dichtmittel aufweist und das bevorzugt ist, ist ein Lot mit dem Handelsnamen KeraGlas von der Firma Kerafol. Die Lote können als Pulver, Dispersion oder Film zum Einsatz kommen. Vorzugsweise werden Lote verwendet, die in Bezug auf die im Membranreaktor herrschenden Prozessbedingungen chemisch inert sind. Dadurch werden unerwünschte Nebenreaktionen unterdrückt, beispielsweise kann hierdurch die Koksbildung reduziert oder vollständig unterbunden werden.

Die abdichtende Verbindung bewirkt, dass die Fluide ausschließlich durch die Membranfläche von der einen Seite auf die andere Seite der beiden Blöcke gelangen. In Bezug auf die Ausgestaltung der Membran ist festzustellen, dass diese vorzugsweise eine zentrosymmetrisch Form aufweist, weiter vorzugsweise in der Form eines Vielecks, darüber hinaus bevorzugt kreisförmig. Die kreisförmige Ausgestaltung der Membran wirkt dabei in besonderer Weise vorteilhaft, weil sie eine isometrische Ausdehnung in alle Raumrichtungen bei Temperaturwechseln bewirkt. Hierdurch wird die Dichtfähigkeit besonders vorteilhaft erhöht. Die Größe des planaren Trägers und der Membran sind aufeinander abgestimmt, wobei der planare Träger im mittleren Bereich einen Durchbruch aufweist. Vorzugsweise befindet sich im Randbereich des Durchbruchs eine Vertiefung zur Auflage der Membran. In einer bevorzugten Ausführung weist der Durchbruch einen freien Durchmesser auf, der im Bereich von 0,5 bis 5 cm liegt, weiter vorzugsweise im Bereich von 0,7 bis 4 cm. Vorzugsweise weist der Rand zur Auflage der Membran eine Breite im Bereich von 1 bis 10 mm auf, weiter vorzugsweise einem Bereich von 2 bis 5 mm.

Das Zwischenelement, das Membran und planaren Träger umfasst, trennt die fluidischen Bereiche des Membranreaktors in zwei Bereiche, und zwar in denjenigen Bereich, der durch die Fluidleitungen des oberen Blocks versorgt wird, und denjenigen Bereich, der durch die Fluidleitungen des unteren Blocks versorgt wird. Im Rahmen der vorliegenden Beschreibung wird der eine Bereich, in dem die Edukte zugeführt werden, der Prozessraum genannt. Der dem Prozessraum gegenüberliegende Bereich, wird als die Spülseite beziehungsweise Abziehseite bezeichnet, da dieser Fluidbereich, dem Wegspülen oder Abziehen von einzelnen Komponenten dient, die durch die Membran hindurchtreten. Der Bereich mit der Spülseite kann auch als Sweep-Bereich bezeichnet werden.

Kennzeichnend für den erfindungsgemäßen Membranreaktor ist, dass jeder einzelne Block jeweils zumindest eine Fluidzufuhrleitung und zumindest eine Fluidabfuhrleitung aufweist. Dadurch lassen sich die Fluidströme sowohl von der Gaszusammensetzung als auch von der Flussmenge auf der Prozessseite als auch auf der Spülseite unabhängig regeln und anpassen.

Eine Membran, die katalytische Eigenschaften aufweist, wird als Katalysatormembran bezeichnet. In einer bevorzugten Ausführungsform ist der Membranreaktor mit einer Katalysatormembran ausgestattet, die durch die Anwesenheit von katalytisch aktiven Komponenten gekennzeichnet ist. Unabhängig davon, in welcher Form die katalytisch aktiven Komponenten innerhalb der Membran oder auch der Tragestruktur der Membran angeordnet sind, wird die Katalysatormembran als ein integrales Element betrachtet. Möglich ist auch die Anordnung eines katalytisch aktiven Films auf der Membran oder katalytische aktive Komponenten innerhalb der Membranschicht.

In einer bevorzugten Ausführungsform ist der äußere Bereich der beiden Blöcke des Membranreaktors mit einer Temperierungseinheit ausgestattet, die ein Heizen oder ein Kühlen des Membranreaktors ermöglicht. Bei der hier eingesetzten Temperierungseinheit handelt es sich um einen Kontaktheizer oder -kühler, Strahlungsheizer, Konvektionsheizer, Konvektionskühler, wobei die Konvektionsheizer und -kühler entweder mit oder ohne Umwälzpumpe ausgestattet sind. Die Regelung der Temperatur erfolgt mit Temperaturreglern, um einzelne Elemente des Membranreaktors an die jeweils gewünschten Prozessbedingungen anzupassen. In einer bevorzugten Ausführungsform sind die Regler in eine übergeordnete Steuerung eingebunden. Entsprechend den gewünschten Prozessbedingungen kann der Membranreaktor bei einer Temperatur im Bereich von -100 °C bis 1600 °C, bevorzugt im Bereich von 0 bis 1500 °C, ganz besonders bevorzugt im Bereich von 50 bis 1200 °C, betrieben werden. Eine Limitierung bei der Temperatur ist durch die Materialbeschaffenheit des Membranreaktors oder der Dichtungen gegeben. Somit wird der Membranreaktor bei der Herstellung für diejenigen Prozessbedingungen ausgelegt, die für die Anwendung von Interesse sind.

In einer bevorzugten Ausführungsform ist die Reaktorheizung des Membranreaktors in die Struktur der Blöcke integriert, um einen besonders guten Wärmeübergang und eine besonders gute Wärmeverteilung in den Fluidkammern beziehungsweise den Kanälen zu bewirken. Vorzugsweise sind die Heizelemente scheibenförmig mit einer Aussparung in der Größe der Fluidkammern.

In einer bevorzugten Ausführungsform ist die Anpressvorrichtung mit lösbaren Verschlusselementen ausgestattet, wobei es bevorzugt ist, dass zwischen den lösbaren Verschlusselementen und den Blöcken Abstandshalter angeordnet sind. Noch weiter bevorzugt ist, dass die lösbaren Verschlusselemente der Anpressvorrichtung mit Kühlelementen ausgestattet sind.

Die Anpressvorrichtung hat die Funktion, die beiden Blöcke in der Weise gegeneinander zu pressen, dass eine plastische Verformung der Dichtungen erfolgt, die oberhalb und unterhalb des Zwischenelements angeordnet sind und die die Kontaktflächen zu den beiden Blöcken abdichten. Die Dichtungen umfassen ein Material, das plastisch oder elastisch verformbar ist. Darüber hinaus sind weisen die die Dichtungen bei der Temperatur und den chemischen Bedingungen, bei denen der Membranreaktor betrieben wird, eine ausreichende Stabilität auf. Falls der Membranreaktor bei Temperaturen von mehr als 200 °C betrieben wird, so werden vorzugsweise Dichtungen aus Metall oder Graphit verwendet. In einer besonders bevorzugten Ausführungsform umfasst die Dichtung Graphit, bevorzugt ist Blähgraphit, wobei es noch weiter bevorzugt ist, dass es sich bei dem blähgraphitischen Material um ein Material handelt, das unter dem Handelsnamen Sigraflex^{®} bezogen werden kann.

Die Presskraft der Anpressvorrichtung sorgt dafür, dass die beiden Blöcke und das dazwischen angeordnete Zwischenelement dichtend abgeschlossen sind und dass das Fluid, das durch die Innenbereiche des Membranreaktors strömt, nicht in unkontrollierter Weise nach außen austritt. Vorzugsweise wird die Presskraft der Anpressvorrichtung durch elastisch verformbare Metallelemente auf die Blöcke aufgebracht. Als elastisch verformbare Metallelemente werden Federn, Tellerfedern, Dehnschrauben eingesetzt, wobei Dehnschrauben bevorzugt sind. Diese elastisch verformbaren Elemente haben die Eigenschaft, dass die elastische Verformung bei Temperaturen oberhalb von 200 °C in eine plastische Verformung übergehen. In der Folge dieser plastischen Verformung nimmt die Presskraft ab, da sich die Anpressvorrichtung längt. Durch Abstandshalter werden elastischen Elemente einschließlich der Fixierelemente der Anpressvorrichtung und die beheizte Zone des Membranreaktors räumlich entkoppelt, wodurch auch eine thermische Kopplung erreicht wird. Die Entkopplung mittels Abstandhalter ist vorteilhaft, um den Membranreaktor bei hohen Temperaturen zu betreiben.

In einer weiteren Ausführungsform wird die räumliche Entkopplung dadurch verbessert, dass die Anpressvorrichtung mit einer Kühlvorrichtung ausgestattet wird. Somit lässt sich die thermische Abschirmung der Anpressvorrichtung gegenüber dem Membranreaktor durch die Auswahl von Abstandshalter und Kühlvorrichtung optimieren. Vorzugsweise wird eine Kühlvorrichtung eingesetzt, die mit Kühlfluid durchströmte Leitungen aufweist. In weiteren Ausführungsformen werden Kühlvorrichtungen eingesetzt, die eine Strahlungs- beziehungsweise eine Konvektionskühlung umfassen.

Jeder der beiden Blöcke weist jeweils zumindest eine Fluidzufuhrleitung und zumindest eine Fluidabfuhrleitung auf. Auf der einen Seite wird der Membran ein Prozessfluid durch die Fluidzufuhrleitung zugeführt. Auf der anderen Seite wird der Membran ein Spülfluid durch die Fluidzufuhrleitung zugeführt.

Die erfindungsgemäße Vorrichtung ist dadurch gekennzeichnet, dass die Fluidzufuhrleitung und die Fluidabfuhrleitung durch einen Kanal verbunden sind, der durch ein Verteilerstrukturelement gebildet wird. Das Verteilerstrukturelement ist entweder in die Kontaktfläche des Blocks eingearbeitet oder es stellt ein separates Element dar. Das Einarbeiten der Verteilerelemente in die Kontaktflächen hat den Vorteil, dass sich die Endpunkte der Kanäle in einfacher Weise dichtend mit der Fluidzufuhrleitung der der Fluidabfuhrleitung verbinden lassen. Der Einsatz von separaten Verteilerelementen hat den Vorteil, dass diese austauschbar sind und der Membranreaktor zur Untersuchung von Verfahren bei unterschiedlichen Betriebsprozessen eingesetzt werden kann. Bezug auf Kanalstruktur und Strömungseigenschaften untersucht werden kann.

In einer Grundausführung handelt es sich bei dem Kanal um einen einzelnen Kanal, der einen kurvenförmigen Verlauf aufweist. In einer weiteren Ausführungsform teilt sich der Kanal am Punkt der Fluidzufuhrleitung in zwei oder mehr Unterkanäle auf, die jeweils eine separate Fluidabfuhrleitung aufweisen.

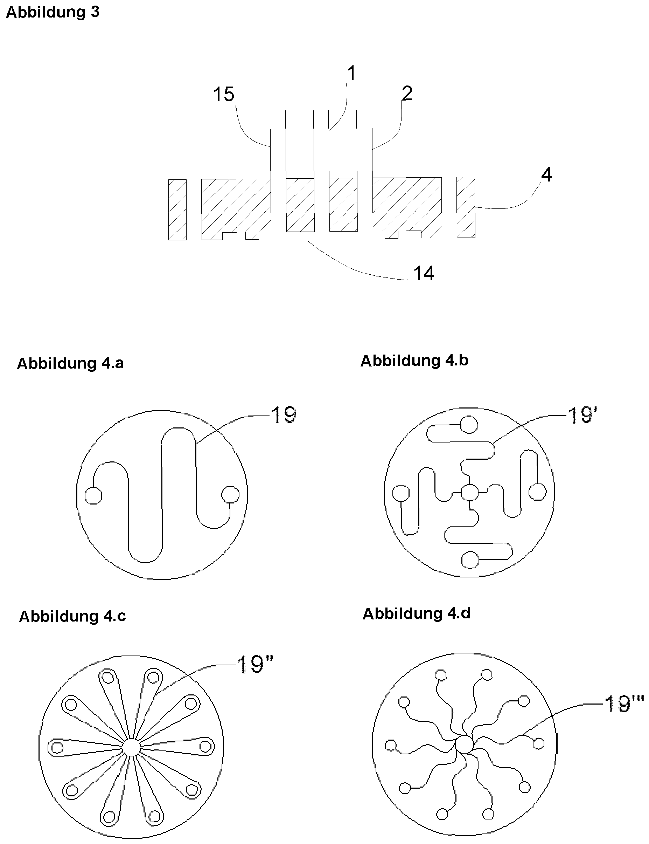

Die bildet Ausnehmung einen gleichmäßigen Totraum oberhalb der Membran. Im Weiteren wird bevorzugt, dass die Verteilerstrukturelemente des oberen Blocks beziehungsweise des unteren Blocks so ausgestaltet sind, wie dies in Abbildungen 4.b bis 4.d schematisch dargestellt ist. Das Verteilerstrukturelement ist dadurch gekennzeichnet, dass die darin enthaltenen Kanäle in Richtung der Membran offen sind und durch diese begrenzt werden. Dies bedeutet auch, dass die Kanäle in die anderen Raumrichtungen geschlossen sind, und nur an den Endpunkten jeweils Verknüpfungen mit den Fluidzufuhrleitung oder den Fluidabfuhrleitung.

Vorzugweise weisen die Kanäle einen Durchmesser im Bereich von 100 bis 2000 Mikrometer auf, weiter vorzugsweise im Bereich von 100 bis 1000 Mikrometer, und insbesondere bevorzugt im Bereich von 100 bis 500 Mikrometer.

Die Kanäle zwischen den zuführenden und abführenden Leitungen sowie dem der Membran beziehungsweise der Katalysatormembran bilden Prozessraum. Die Kanäle zwischen der zumindest einen zuführenden und der zumindest einen abführenden Leitung auf der Seite, die dem Prozessraum gegenüberliegt, werden als Abspülraum oder Sweep-Raum bezeichnet. Der Begriff Prozessraum oder Prozessbereich beschränkt sich auf den Innenraum des Kanals beziehungsweise der Kanäle, die im Verteilerstrukturelement enthalten sind. Somit bezieht sich der Begriff des Prozessraums nicht auf den Innenbereich der Fluidzufuhrleitung und der Fluidabfuhrleitung. Das Gleiche gilt auch für den Bereich des Abspülraums oder den Sweep-Raum, der sich auf den Innenraum desjenigen Kanals bezieht, der im Verteilerstrukturelement vorhanden ist.

In einer weiteren Ausführungsform des Membranreaktors, die auch bevorzugt ist, ist entweder der Prozessraum oder der Abspülraum beziehungsweise der Sweep-Raum mit einer Kapillare verbunden, die eine Entnahmen von Gasproben und deren Zuführung zu einer Analyseneinheit ermöglicht. In einer weiter bevorzugten Ausführungsform sind sowohl der Prozessraum als auch der Abspülraum beziehungsweise der Sweep-Raum mit Kapillaren zur Entnahme von gasförmigen Proben verbunden.

Darüber hinaus ist eine Ausführungsform des Membranreaktors bevorzugt, bei dem die Kapillare variabel positioniert werden kann, wodurch eine Gasentnahme mit der räumlichen Auflösung entnommen werden kann, die eine verbesserte Prozessanalyse ermöglicht gegenüber denjenigen Verfahren, die auf die Analyse der Fluide beschränkt sind, die aus den Fluidabfuhrleitungen austreten.

Im Fall, dass der Membranreaktor in einer Ausführungsform mit Kapillare vorliegt, so ist es bevorzugt, dass die Kapillare einen Außendurchmesser im Bereich von 100 bis 5000 Mikrometer aufweist, weiter vorzugsweise im Bereich von 200 bis 2000 Mikrometer, darüber hinaus bevorzugt im Bereich von 300 bis 1000 Mikrometer. Weiterhin bevorzugt ist, dass die Kapillare einen Innendurchmesser aufweist, der im Bereich von 10 bis 4000 Mikrometer liegt, weiter vorzugsweise im Bereich von 50 bis 1000 Mikrometer, insbesondere bevorzugt im Bereich von 100 bis 500 Mikrometer.

Ein weiterer Aspekt der vorliegenden Erfindung betrifft eine Vorrichtung zur Charakterisierung von Membranen, die einen Membranreaktor gemäß einer der Ausführungsformen umfasst, die Teile der Beschreibung und der Ansprüche ist.

In einer weiteren Ausführungsform betrifft die Erfindung eine Vorrichtung zur Charakterisierung von Membranen, die zwei oder mehr Membranreaktoren aufweist.

Vorzugsweise liegen die zwei oder mehr Membranreaktoren in einer stapelförmigen Anordnung vor.

In einer weiteren Ausführungsform weist der erfindungsgemäße Membranreaktor eine Ausgestaltung auf, bei dem die Zwischenelemente mit einer Mehrzahl von Membranen ausgestattet werden, wobei die planaren Träger eine Vielzahl von Durchführungen aufweisen zur Aufnahme von Membranen aufweisen. Die einzelnen Bauelemente müssen den jeweiligen strukturellen Gegebenheiten des Membranreaktors in der entsprechenden Weise angepasst werden.

Weitere Ausführungen sind Stapelungen zumindest einer weiteren Membran entlang des stapelförmigen Aufbaus. Die gestapelten Membranen liegen bevorzugt auf der Membran auf oder sind chemisch oder physikalisch verbunden. Bevorzugt ist hier das Aufliegen, Verkleben oder Verpressen oder Versintern oder Siebdrucken oder weitere Verfahren des 3D Druckes wie Binder-Jetting oder Materialextrusion oder Material-Jetting sowie eine Kombination der genannten. Beiderseits der Membran können Katalysatoren in unterschiedlichen Ausgestaltungen angebracht sein. Der Katalysator enthält zumindest ein oder mehrere Metalle oder Metalloxide oder metallhaltige Ausgangsstoffe, und zwar in der Form von Nanopartikeln, Pulver, Partikel, Formkörper oder Folien. Der Katalysator ist in physischem Kontakt mit der Membran. Bevorzugt ist hier das Aufliegen, Verpressen oder Versintern oder Siebdrucken oder weitere Verfahren des 3D-Druckes wie Binder-Jetting oder Materialextrusion oder Material-Jetting sowie eine Kombination der genannten. Beim Jetting handelt es sich um die Materialaufbringung mittels eines Spritzverfahrens bei dem spezielle Druckspritzdüsen verwendet werden. Der Katalysator kann chemisch auf der Membran immobilisiert sein. Der Katalysator kann aus metallhaltigen Ausgangsstoffen während des Betriebes des Membranreaktors gebildet werden.

Die Erfindung betrifft auch eine Vorrichtung zur Untersuchung von Membranen, die einen Membranreaktor umfasst, die in einer der Ausführungsformen vorliegt, die hier beschrieben werden. Darüber hinaus ist auch ein Verfahren zur Untersuchung von Membranen mittels des erfindungsgemäßen Membranreaktors umfasst.

In Bezug auf das erfindungsgemäße Verfahren zur Durchführung von Membranprozessen ist festzustellen, dass dies bei einem Druck in einem Bereich von 0,05 - 300 barg durchgeführt wird, vorzugsweise in einem Bereich von 0,1 bis 250 barg.

In Bezug auf das erfindungsgemäße Verfahren zur Durchführung von Membranprozessen ist festzustellen, dass der absolute Gasdruck in den beiden Fluidkammern gleich oder verschieden sein kann. Ist der absolute Gasdruck zwischen den beiden Fluidkammern unterschiedlich so liegt die Gasdruckdifferenz bevorzugt in einem Bereich von 0,05 - 200 barg, vorzugsweise in einem Bereich von 0,1 bis 50 barg.

Vorzugsweise wird das Verfahren bei einer Temperatur in einem Bereich von -100 bis 1600 °C durchgeführt, weiter vorzugsweise bei einer Temperatur in einem Bereich von 0 bis 1500 °C, darüber hinaus bevorzugt bei einer Temperatur in einem Bereich von 50 bis 1200 °C.

Bei der Durchführung des Verfahrens ist es bevorzugt, dass die lösbaren Verschlusselemente während des Verfahrens bei einer Temperatur von ≦ 250 °C gelagert werden, vorzugsweise bei einer Temperatur von ≦ 200 °C.

Beispielhafte Ausführungsformen der Erfindung sind in den Abbildungen gezeigt und werden in der Beschreibung näher erläutert.

Zu den Abbildungen:
- Abbildung 1: zeigt eine schematische Darstellung einer Schnittzeichnung von einer Ausführungsform des erfindungsgemäßen Membranreaktors 01, der die zwei Blöcke 4,8 und eine Anpressvorrichtung 14 umfasst.
- Abbildung 2: zeigt eine schematische Darstellung des Zwischenelements 6 in einer Ausführung, bei der eine Membran 22 auf der oberen Seite des planaren Trägers 20 positioniert ist.
- Abbildung 3: zeigt eine schematische Darstellung eines Blocks 4 in einer Ausführungsform, bei der der Block 4 mit einer Fluidzuführungsleitung 1 und zwei Fluidabführungsleitungen 2, 15 ausgelegt ist.
- Abbildung 4: schematische Darstellungen eines Verteilerstrukturelements 19 in vier unterschiedlichen Ausführungsformen: in Abb. 4.a mit einem einzelnen kurvenförmigen Kanal, in Abb. 4.b mit vier kurvenförmigen Kanälen, in Abb. 4.c mit zehn sternförmig verlaufenden Kanälen, die geradlinig von der Mitte nach außen verlaufen, in Abb. 4.d mit zehn sternförmigen Kanälen, die kurvenförmig von der Mitte nach außen verlaufen.
- Abbildung 5: zeigt eine schematische Darstellung eines Membranreaktors in einer Ausführungsform mit Anpressvorrichtung, wobei im Bereich zwischen den Blöcken und der Anpressvorrichtung jeweils auch Abstandshalter 35, 35' angeordnet sind. In der Abbildung umfasst die dargestellte Anpressvorrichtung die Elemente Fixierung 31, Verschlusselement 32 und Feder 33.
- Abbildung 6: zeigt eine schematische Darstellung eines Membranreaktors in einer Ausführungsform, die in Abbildung 1 gezeigt wird, wobei der Membranreaktor eine Kapillarmesssonde 50 aufweist, die durch die Fluidleitung 1 in die Fluidkammer geführt wird.
- Abbildung 7: zeigt eine schematische Darstellung eines verfahrenstechnisches Fließbild einer erfindungsgemäßen Vorrichtung, die mit einer erfindungsgemäßen Ausführung des Membranreaktors ausgestattet ist.
- Abbildung 8: zeigt eine schematische Darstellung des Membranreaktors, der mit vier Membranen 22 bestückt ist.
- Abbildung 9: zeigt eine schematische Darstellung des Membranreaktors, der mit einem Verteilerstrukturelement ausgestattet ist, das kreuzförmige Kanäle 29 und eine einzelne Membran 22 aufweist, wobei zwischen dem Zwischenelement und dem Verteilerstrukturelement ein Dichtungsmittel 17 enthalten ist.

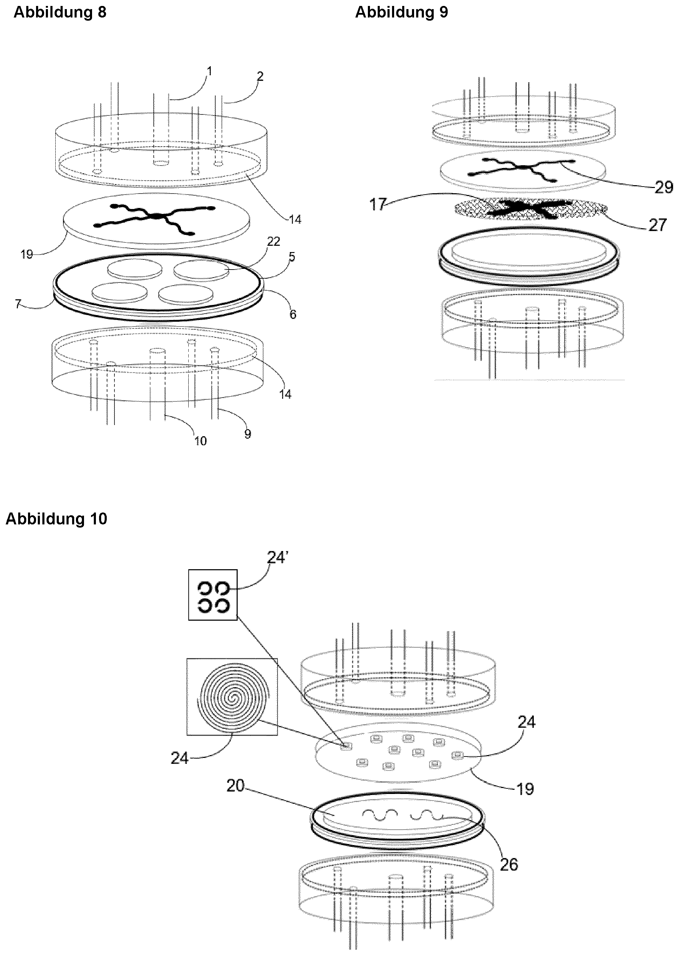

- Abbildung 10: zeigt eine schematische Darstellung des Membranreaktors, der mit einer einzelnen Membran 20 bestückt ist, die Mikrostrukturelemente 26 aufweist. Zwischen dem Zwischenelement dem oberen Block ist ein Verteilerstrukturelement 19 angeordnet, welches mit den Strömungsbrechern 24 versehen ist. Insgesamt sind zehn Strömungsbrecher zu erkennen. Das Verteilerstrukturelement 19 ist in einer Ansicht auf die Unterseite gezeigt, wobei die Aussparungen, die zur Gaszuleitung dienen, nicht dargestellt sind. Anhand der Vergrößerung, die mit dem Bezugszeichen 24 und 24' verbunden sind, wird illustriert, dass die Strömungsbrecher unterschiedlich ausgestaltet sein können.
- Abbildung 11: zeigt eine schematische Darstellung der Kombination eines Rohrreaktors mit einem Membranreaktor, wobei Fluidstromausgangsseite des Rohrreaktor die Fluidzufuhrleitung zu einem Membranreaktor darstellt, der in der Abbildung mit zwei unterschiedlichen Membranen ausgestattet ist.
- Abbildung 12: zeigt eine schematische Darstellung der Kombination zwei parallel angeordneten Rohrreaktoren mit einem Membranreaktor, wobei Fluidstromausgangsseite der Rohrreaktor zu einem Mehrportschaltventil geführt werden und wahlweise zur Fluidzufuhrleitung des Membranreaktors oder in eine Auslassleitung geführt werden. Der in Abbildung 12 gezeigte Membranreaktor ist mit zwei Membranen 22 ausgestattet, die auf dem Zwischenelement 6 angeordnet sind.

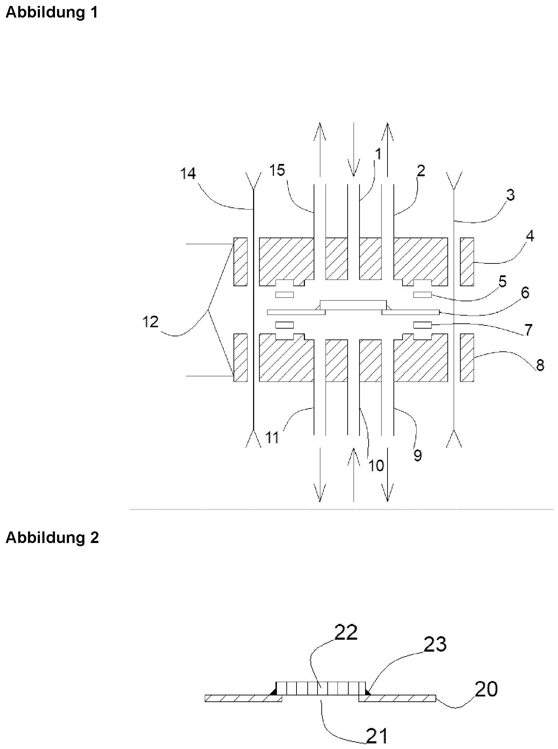

Abbildung 1 zeigt eine Darstellung des erfindungsgemäßen Membranreaktors, bei dem die zwei Blöcke jeweils mit einer Fluidzufuhrleitung und mit jeweils zwei Fluidabfuhrleitung ausgestattet sind. Die beiden Fluidzufuhrleitungen 1, 10 sind jeweils in der Mitte des Blocks 4, 5 angeordnet und führen zum Mittelbereich der Fluidkammer. Die Fluidableitungen 2, 15 und 9, 11, die auf den gegenüberliegenden Seiten der Blöcke angeordnet sind, sind mit dem Außenbereich der Fluidkammer verbunden. Es ist anzumerken, dass die Anzahl der Fluidableitung nur illustrativ ist und in einer bevorzugten Ausführungsform weitere Fluidableitungen mit den Blöcken und den darin enthaltenen Fluidkammern verbunden sind. Ebenso ist eine Ausführungsform bevorzugt, bei der die Strömungsrichtung der Fluidströme in den Fluidleitungen in eine entgegengesetzte Richtung verläuft gegenüber der eingezeichneten Richtung. Entgegengesetzte Strömungsrichtung bedeutet, dass die mit dem Außenbereich der Fluidkammern verbundenen Fluidleitungen, die Fluidzuleitungen und die im Mittelbereich angeordnete Fluidleitung die Fluidableitung darstellt. Bevorzugt ist eine Ausführungsform bei der eine Fluidleitung zum Zentrum einer Fluidkammer und eine Pluralität von mindestens drei, vorzugsweise mindestens vier Fluidleitungen zum Außenbereich der Fluidkammer führt. Dabei unterscheiden sich jeweils die zum Zentrum führenden und die zum Außenbereich führenden Fluidleitung in Bezug auf die Richtung des Fluidstroms. Darüber hinaus weist der Membranreaktor zwei Dichtungen 5, 7 auf, die auf zwei unterschiedlichen Seiten des Zwischenelements 6 positioniert werden. Die Flächen, an denen die Blöcke gegeneinandergepresst werden, bilden jeweils eine Kontaktfläche. Die in der Abbildung 1 dargestellte Ausführungsform zeigt auch, dass in den Kontaktflächen der Blöcke 4, 5 Nuten für die Fixierung der Dichtungen 5, 7 eingelassen sind. Eine Fixierung der Dichtungen 5, 7 in Nuten ist vorteilhaft, da dies ein Verrutschen der Dichtungen 5, 7 verhindert. Der Abbildung ist zu entnehmen, dass die Dichtungen 5, 7, so angeordnet sind, dass diese beim Andrücken den planaren Träger des Zwischenelements abdichten.

In Abbildung 2 ist eine mögliche Ausführungsform des Zwischenelements 6 gezeigt, die einen planaren Träger 20 mit einer Durchführung aufweist, die in der Mitte des planaren Trägers 20 angeordnet ist und die mit einer Membran 22 abgedeckt ist. In der gezeigten Ausführung handelt es sich bei dem planaren Träger 20 und der Membran 22 um separate Elemente die durch eine Abdichtung 23 dichtend miteinander verbunden sind. Es ist hervorzuheben, dass das Zwischenelement 6 unterschiedliche Ausführungsformen aufweisen kann.

In der Abbildung 3 ist ein Teilausschnitt aus der Darstellung gezeigt, die in Abbildung 1 gezeigt wird. Bezugszeichen 14 führt zur Fluidkammer, wobei kein Verteilerstrukturelement in der Fluidkammer dargestellt ist. es lässt sich jedoch erkennen, dass die Fluidkammer eine ebene Struktur aufweist, die in einer bevorzugten Ausführungsform der Aufnahme der Verteilerstrukturelemente dient.

In der Abbildung 4 sind schematische Darstellungen von vier unterschiedlichen Verteilerstrukturelementen gezeigt, welche mit den Buchstaben a bis d gekennzeichnet sind. Es ist anzumerken, dass die Darstellung illustrativ ist im Hinblick auf den Verlauf der Kanäle und die Dimensionierung der Kanäle.

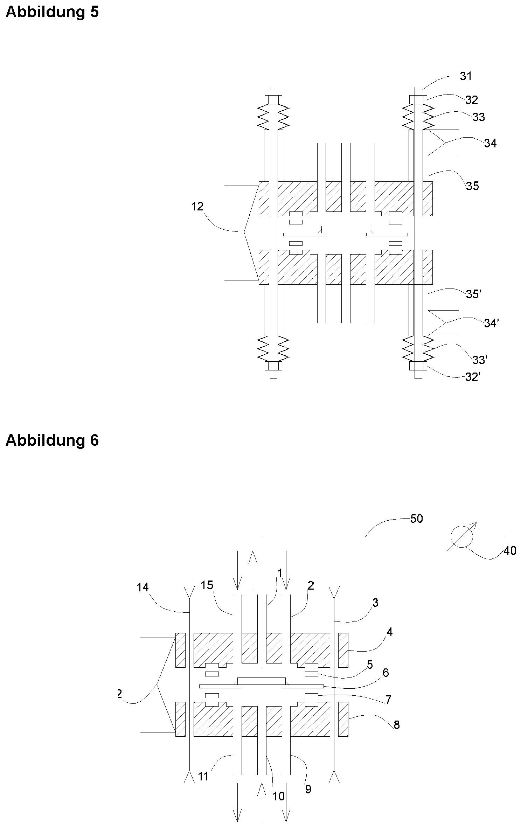

Abbildung 5 zeigt eine schematische Darstellung einer Ausführungsform des erfindungsgemäßen Membranreaktors, der mit einer Anpressvorrichtung ausgestattet ist, die die Abstandshaltern 35. 35' umfasst. Die Abstandshalter 35. 35' sind mit Kühlvorrichtung 34, 34' versehen. Die Kühlvorrichtung 34, 34 ermöglicht die Temperierung der Abstandshalter, was von Bedeutung ist, um den Membranreaktor im Hochtemperaturbereich zu betreiben, der oberhalb von 500 °C liegt, weiter vorzugsweise oberhalb von 800 °C, darüber hinaus bevorzugt oberhalb von 1000 °C. Der Betrieb des Membranreaktors im Hochtemperaturbereich führt zu einer starken thermischen Beanspruchung der Anpressvorrichtung, die durch die Kombination aus Abstandshalter 35. 35'mit Kühlvorrichtung 34, 34' in effizienter Weise beseitigt wird, weshalb der erfindungsgemäße Membranreaktor eine gute Handhabbarkeit für den Forschungsbetrieb aufweist. Die einzelnen Bestandteile können in lösbarer Weise miteinander verbunden werden und nach der Durchführung des Verfahrens wiederverwendet werden.

Abbildung 6 zeigt die schematische Darstellung einer bevorzugten Ausführungsform der Vorrichtung, die mit einer Kapillarmesssonde 50 ausgestattet ist, die in der gezeigten Ausführungsform durch eine Fluidleitung geführt wird, die eine Fluidabfuhrleitung bildet. Nicht zu erkennen in der Abbildung 6 ist, dass die Spitze der Kapillarmesssonde 50 höhenverstellbar im Membranreaktor positioniert werden kann. Damit ist es möglich die Zusammensetzung des Fluidstroms in unterschiedlichen räumlichen Abständen von der Membran zu bestimmen. Beispielsweise kann der Abstand im Bereich von 0,5 Millimeterschritten variiert werden. Eine Ausführungsform des erfindungsgemäßen Membranreaktors mit Kapillarmesssonde 50 kann anders ausgestaltet sein als ein Membranreaktor ohne eine Kapillarmesssonde 50, da die Abmessungen Innenraum des Membranreaktors, die entsprechenden technischen Voraussetzungen für die Aufnahme der Kapillarmesssonde aufweisen muss. Die Kapillarmesssonde wird in die Fluidkammer beziehungsweise einen Kanal eines Verteilerstrukturelements eingeführt. Dies setzt voraus, dass die Fluidkammer oder der Kanal des Verteilerstrukturelements die passende Dimensionierung aufweisen. In Bezug auf die Angaben zur Dimensionierung der Kanäle bedeutet dies, dass die Dimensionen auch von den zuvor genannten Dimensionen abweichen, sofern dies in Verbindung mit der jeweils ausgewählten Kapillarmesssonde erforderlich ist. Der erfindungsgemäße Membranreaktor in einer Ausführungsform mit eine Kapillarmesssonde ist vorteilhaft, da die Prozessparameter mit einer Bestimmung der lokalen Zusammensetzung der Fluidströmung bestimmt werden kann.

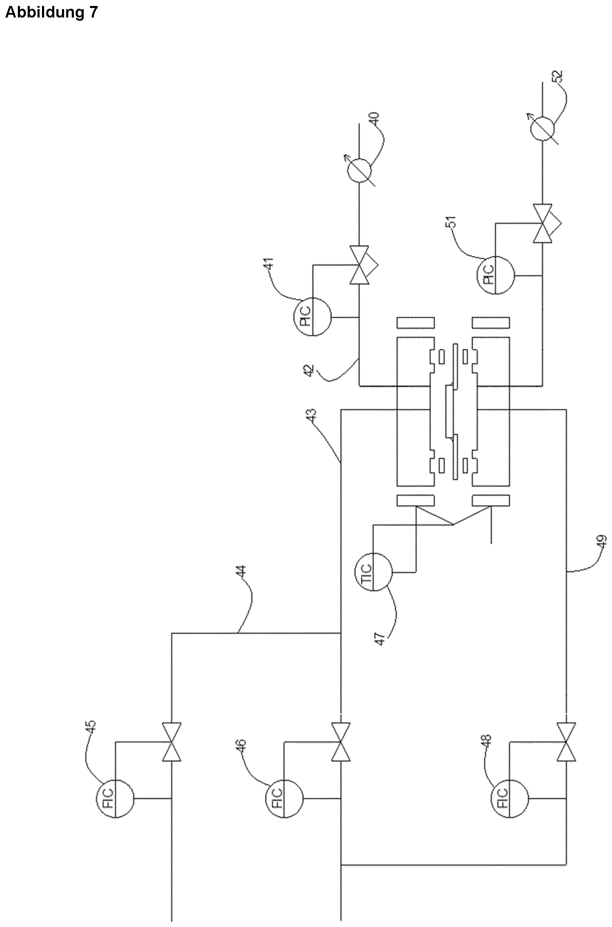

In der Abbildung 7 ist eine schematische Darstellung der Vorrichtung gezeigt, in die der erfindungsgemäße Membranreaktor integriert wird. Zu erkennen sind die Mess- und Regeleinheiten der Zuführung auf der Seite des Prozessraums und auf der Seite des Spülraums.

In der Abbildung 8 zeigt eine schematische Darstellung des Membranreaktors, der mit vier Membranen 22 bestückt ist. Auf dem Zwischenelement 6 sind vier Membranen 22 angeordnet. Das Zwischenelement 6 befindet sich zwischen den zwei Blöcken 4, 5, wobei in der oberen Fluidkammer das Verteilerstrukturelement 19 positioniert ist, welches vier Kanäle aufweist.

In der Abbildung 9 ist eine schematische Darstellung des Membranreaktors aus der Abbildung 8 gezeigt, wobei das Zwischenelement mit vier Membranen gegen ein Zwischenelement mit einer einzigen Membran ausgetauscht ist. Weiterhin ist zwischen dem Verteilerstrukturelement 19 und dem Zwischenelement 6 ein Dichtungsmittel 27 angeordnet. Das Dichtungsmittel 27 ist in Form einer Dichtungsscheibe dargestellt, wobei die Dichtungsscheibe auch an denjenigen Stellen Auslassungen aufweist, die verhindern, dass die Kanäle 29 des Verteilerstrukturelements 19 durch die Dichtungsscheibe blockiert werden. Es wird somit gewährleistet, dass die Kanäle 29 des Verteilerstrukturelements 19 eine Kontaktfläche mit der Membran 22 aufweisen. In einer weiteren Ausführungsform ist es möglich, dass das Dichtungsmittel 27 mit in die Fläche des Verteilerstrukturelements 19 integriert ist. In der Abbildung 8 und der Abbildung 9 weisen die Blöcke 4, 5 jeweils eine Fluidzufuhrleitung 10 und vier Fluidabfuhrleitungen 9 auf. Ein Aspekt des erfindungsgemäßen Membranreaktors lässt sich auch anhand der der Abbildungen erkennen, die in den Abbildungen 8, 9 und 10 gegeben sind. Beispielsweise kann der Abbildung 9 gezeigte Membranreaktor auch unter Verzicht auf den Einsatz des Verteilerstrukturelements 19 und des Dichtungsmittels 27 betrieben werden, wobei der Vorteil hier dadurch gegeben ist, dass Vielzahl von Fluidabfuhrleitungen eine sehr gute Durchmischung des Gasstroms innerhalb der Fluidkammer ermöglicht wird. In der Abbildung 10 wird dann gezeigt, dass es möglich ist, die Fluiddurchmischung durch das Anbringen von Strömungsbrechern 24 noch weiter zu verstärken. Hierbei ist es auch möglich, dass Vorliegen von Strömungsbrecher 24 mit dem Vorliegen von Mikrostrukturelementen kombiniert wird. In Bezug auf die Strömungsbrecher ist festzustellen, dass diese eine konzentrische Ringstruktur aufweisen können, wie dies beispielhaft anhand von Abbildung 10 dargestellt wird. In Abbildung 10 sind die Strömungsbrecher 24 in das Verteilerelement 19 integriert. Die Formen sind nicht auf die Ringstruktur beschränkt, die unter Bezugszeichen 24 in Abbildung 10 dargestellt sind, sondern können auch beliebige andere Formen aufweisen. Beispielsweise sind unter Bezugszeichen 24' in Abbildung 10 ringförmige Kreise mit Fehlstellen gezeigt.

In der Abbildung 10 ist eine schematische Darstellung des Membranreaktors gezeigt, der mit dem Verteilerstrukturelement 19 ausgestattet ist, welches zehn Strömungsbrecher 24 aufweist. Zusätzlich sind in die Oberfläche der Membran 20 auch Mikrostrukturelemente 26 eingearbeitet. Mittels eines Austauschs des gezeigten Verteilerstrukturelements 19, welches Strömungsbrecher 24 gegen ein Verteilerstrukturelement 19 mit Kanälen 29 lassen sich die Strömungsbedingungen innerhalb der Fluidkammern in einfacher Weise verändern. Vorteilhaft ist auch, dass das die Membran 20 tragende Zwischenelement 6 einfach gegen ein anderes Zwischenelement 6 mit einer anderen Membran ausgetauscht werden kann. Erkennbar ist hierbei, dass ein Aspekt des erfindungsgemäßen Membranreaktors in der Modularität des Aufbaus liegt, der mit einem geringen technischen Aufwand eine Durchführung von Untersuchungen unter ganz unterschiedliche Prozessbedingungen ermöglicht. Die unterschiedlichen Elemente des Membranreaktors können hier kombiniert werden, so dass - wie in der Abbildung 9 gezeigt - nur in einer Fluidkammer ein Verteilerstrukturelement 19 angeordnet ist. In einer weiteren Ausführungsform sind Verteilerstrukturelemente 19 sowohl in der oberen Fluidkammer als auch in der unteren Fluidkammer angeordnet.

Für den Fall, dass die Verteilerstrukturelemente 19 Kanäle 29 aufweisen, so ist es bevorzugt, dass die Kontaktflächen zwischen den Verteilerstrukturelementen 19 und den Membranen 20, die neben den Kanälen liegen mit geeigneten Dichtungsmitteln 27 versehen sind. Die Dichtungsmittel 27 limitieren den Fluidstrom auf die Kanäle und verhindern einen unkontrollierten Fluidstrom durch die Kontaktfläche. Somit folgt hieraus auch, dass diejenigen Membranen 20, die mit den Verteilerstrukturelementen 19 in Kontakt stehen, welche Kanäle aufweisen, keine Mikrostrukturelemente aufweisen, oder zumindest in den Bereichen der Kontaktflächen zur Membran 20 keine Mikrostrukturelemente aufweisen. Der Grund ist, dass die Mikrostrukturelemente auch die Dichtungseigenschaften negativ beeinträchtigen können und zu undichten Stellen führen, die einen unkontrollierten Fluidstrom ermöglichen könnten, der außerhalb des Bereichs der Kanäle 29 liegt.

Aus den vorliegend gegebenen Erläuterungen folgt auch, dass diejenigen Ausführungsform des erfindungsgemäßen Membranreaktors besonders bevorzugt ist, der durch die Kombination des erfindungsgemäßen Membranreaktors mit einer oder mehrerer Kapillarsonden gegeben ist, die in den Fluidkammern oder den Kanälen der Verteilerstrukturelemente positioniert werden können und eine orts- und zeitaufgelöste Entnahme von Fluiden aus dem Prozess erfolgen kann.

Ein weiterer Aspekt des erfindungsgemäßen Membranreaktors ist, dass dieser ist, dass dieser mit zumindest einem weiteren Reaktor kombiniert wird, vorzugsweise Rohrreaktoren 61, weiter vorzugsweise parallel angeordnete Rohrreaktoren. Vorzugsweise weist ein einzelner Rohrreaktor ein Innenvolumen im Bereich von 0,2 bis 50 mL auf, weiter vorzugsweise 0,5 bis 20 mL, insbesondere bevorzugt ein Innenvolumen im Bereich von 1 bis 10 mL. Vorzugsweise werden die Rohrreaktoren bei einer GHSV im Bereich von 500 bis 150.000 h⁻¹ betrieben.

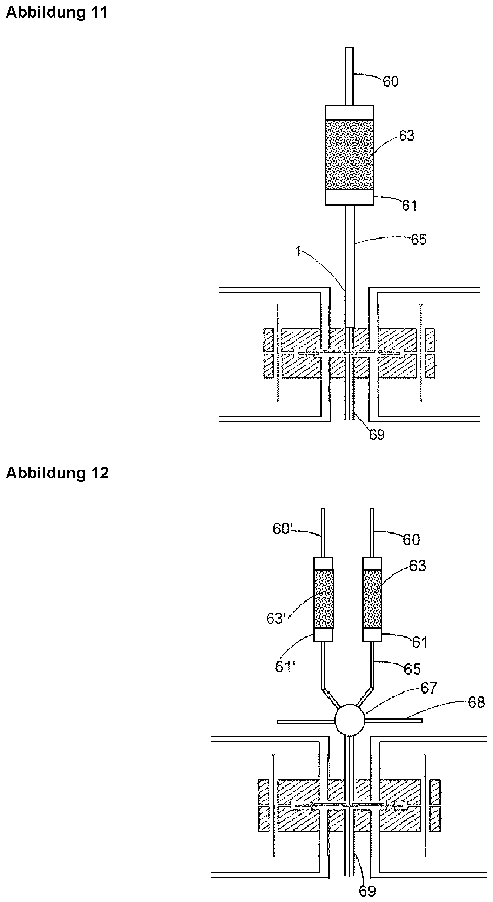

In einer bevorzugten Ausführungsform ist der erfindungsgemäße Membranreaktor mit einem Rohrreaktor kombiniert, wobei in Abbildung 11 dargestellt ist, dass die Ausgangsleitung 65 des Rohrreaktors 61 mit der Fluidzufuhrleitung 1 des Membranreaktors verknüpft ist.

Die Kombination des erfindungsgemäßen Membranreaktors mit weiteren Reaktoren, vorzugsweise Rohrreaktoren 61, 61' oder auch Membranreaktoren, hat einen Vorteil, das komplexe industrielle Prozesse im Labor durch die Module in sehr einfacher Weise nachgestellt werden können. Aufgrund der Tatsache, dass der erfindungsgemäße Membranreaktor eine sehr genaue Prozesskontrolle ermöglicht, können im Labormaßstab Prozessdaten generiert werden, die eine hohe Genauigkeit und Reproduzierbarkeit aufweisen. Somit bietet die Erfindung die Möglichkeit, dass verbesserte Prozesse auch schneller in den industriellen Maßstab übertragen werden können, wodurch Energie und Ressourcen beim Up-scaling eingespart werden.

Vorteilhaft des erfindungsgemäßen Membranreaktors ist, dass dieser eine geringe Abmessung aufweist. In Bezug auf die Abmessungen ist das Folgende festzustellen: unter der Annahme, dass der erfindungsgemäße Membranreaktor eine quaderförmige Außenstruktur aufweist, so sind die Abmessungen von Breite x Höhe x Tiefe vorzugsweise in einem Bereich von 5 cm x 5 cm x 5 cm bis 50 cm x 50 cm x 40 cm, weiter vorzugsweise sind die Abmessungen von Breite x Höhe x Tiefe in einem Bereich von 7,5 cm x 7,5 cm x 7,5 cm bis 25 cm x 25 cm x 20 cm, und noch weiter vorzugsweise sind die Abmessungen von Breite x Höhe x Tiefe in einem Bereich von 8 cm x 8 cm x 8 cm bis 20 cm x 15 cm x 20 cm Dies hat den Vorteil, dass der Membranreaktor an existierende Plattform der Anmelderin angekoppelt werden kann und mit der Programmsteuerung kombiniert werden kann. Somit betrifft der erfindungsgemäße Membranreaktor auch eine Steuerung und Kontrolle von Membranprozessen, die dadurch gekennzeichnet sind, dass die Fluidabfuhrleitungen des Membranreaktors zu einer Analyseneinheit geführt werden, die eine automatische Analyse der Produktfluidströme durchführt. Bei den Analyseneinheit handelt es sich um Analyseneinheiten für die Analyse von gasförmigen Produkten. Insbesondere bevorzugt sind Gaschromatographie, Massenspektroskopie, FTIR-Spektroskopie.

### Bezugszeichenliste

- 1: Fluidzufuhrleitung
- 2: Fluidabfuhrleitung
- 3: Anpressvorrichtung
- 4: Block
- 5, 7: Dichtungen
- 6: Zwischenelement
- 8: Block
- 9: Fluidabfuhrleitung
- 10: Fluidzufuhrleitung
- 11: Fluidabfuhrleitung
- 12: Temperierungseinheit
- 14: Anpressvorrichtung
- 15: Fluidabfuhrleitung
- 17: Kanal im Dichtungsmittel
- 19: Verteilerstrukturelement (beziehungsweise auch 19', 19", 19‴)
- 20: Zwischenelement mit planarem Träger und Membran 22
- 21: Durchführung
- 22: Membran
- 23: Abdichtung
- 24, 24': Strömungsbrecher
- 25: Abdichtung
- 26: Mikrostrukturelement
- 27: Dichtungsmittel
- 29: Kanal
- 31: Fixierung (beziehungsweise auch 31')
- 32: Verschlusselement (beziehungsweise auch 32')
- 33: Feder (beziehungsweise auch 33')
- 34: Kühlvorrichtung (beziehungsweise auch 34')
- 35: Abstandhalter (beziehungsweise auch 35')
- 40: Analysengerät
- 41: Vordruckregler
- 42: Leitung
- 43: Leitung
- 44: Leitung
- 45: Flussregler
- 46: Flussregler
- 47: Temperaturregler
- 48: Flussregler
- 49: Leitung
- 50: Kapillarmesssonde
- 51: Druckregler
- 52: Analysengerät
- 60, 60': Eduktfluidzuführung
- 61, 61': Rohrreaktor
- 63, 63': Feststofkatalysatorbett
- 65, 65: Produktableitung, Rohrreaktor
- 66: Fluidzufuhrleitung mit Doppelleitung
- 67: Multiportverteilerventil
- 68: Nebenleitung
- 69: Fluidzufuhrleitung mit Doppelkanälen
- 100: Fluidzufuhrleitung mit Doppelkanälen

## Patentansprüche

1. Membranreaktor für Durchflussreaktionen, umfassend:
(a) zwei Blöcke mit Fluidkammern, die jeweils zumindest eine Fluidzufuhrleitung und zumindest eine Fluidbabfuhrleitung aufweisen;
(b) ein Zwischenelement, welches einen planaren Träger und zumindest eine Membran umfasst, die in der Mitte des Trägers angeordnet ist oder die auf dem Träger angeordnet sind, im Fall, dass mehrere Membranen vorliegen;
(c) eine Anpressvorrichtung,
wobei das Zwischenelement mit Dichtungen versehen ist und zwischen den Fluidkammern der Blöcke angeordnet ist, die mit der Anpressvorrichtung fixiert sind, und wobei der Membranreaktor **dadurch gekennzeichnet ist, dass** dieser entweder plattenförmige Fluidkammern mit einer Vielzahl von Fluidleitungen aufweist, vorzugsweise ist die Anzahl an Fluidleitungen ≥ 4, oder dass dieser zumindest ein Verteilerelement aufweist, wobei das oder die Verteilerelemente in den Fluidkammern, jeweils zwischen einem Block und dem Zwischenelement, angeordnet sind und aus der Gruppe Kanalstrukturlement, Strömungsbrecher oder Mikrostrukturelement ausgewählt sind und jede Fluidkammer mit zumindest zwei Fluidleitungen verbunden ist.

2. Membranreaktor für Durchflussreaktionen nach Anspruch 1, wobei der Membranreaktor mehrere Verteilerelement aufweist, die in Form von zwei Verteilerstrukturelementen vorliegen, wobei das eine Verteilerstrukturelement auf der oberen Seite in der Fluidkammer des ersten Blocks und das zweite Verteilerstrukturelement auf der unteren Seite des Zwischenelements in der Fluidkammer des zweiten Blocks angeordnete sind.

3. Membranreaktor für Durchflussreaktionen nach Anspruch 1 oder Anspruch 2, wobei beide Verteilerstrukturelemente Bestandteil der Blöcke bilden und in die jeweiligen Fluidkammern der Blöcke eingearbeitet sind.

4. Membranreaktor für Durchflussreaktionen nach einem der Ansprüche 1 bis 3, wobei der planare Träger des Zwischenelements einen Durchbruch mit einer Vertiefung aufweist, wobei die Membran in der Vertiefung positioniert ist und wobei die Membran mit einem Dichtungsmittel abgedichtet ist, in einer bevorzugten Ausführungsform weist der planare Träger zwei oder mehr Durchbrüche mit Vertiefungen auf, in denen Membranen positioniert sind, die mit Dichtungsmitteln abgedichtet sind.

5. Membranreaktor für Durchflussreaktionen nach einem der Ansprüche 1 bis 4, wobei ein einzelnes Verteilerstrukturelement einen oder mehrere Fluidkanäle aufweist, die Länge eines Fluidkanals im Bereich von 10 bis 50 mm und der Durchmesser eines Fluidkanals im Bereich von 50 bis 2000 µm, weiter vorzugsweise im Bereich von 100 bis 1000 µm, darüber hinaus bevorzugt in einem Bereich von 100 bis 500 µm, liegen.

6. Membranreaktor für Durchflussreaktionen nach einem der Ansprüche 2 bis 5, wobei die Verteilerstrukturelemente je zwei Kanäle aufweisen und die Blöcke jeweils zwei Fluidabfuhrleitungen.

7. Membranreaktor für Durchflussreaktionen nach einem der Ansprüche 2 bis 6, wobei die Anpressvorrichtung mit lösbaren Verschlusselementen ausgestattet ist, vorzugsweise sind zwischen den lösbaren Verschlusselementen und den Blöcken Abstandshalter angeordnet.

8. Membranreaktor für Durchflussreaktionen nach Anspruch 7, wobei die lösbaren Verschlusselemente der Anpressvorrichtung mit Kühlelementen ausgestattet sind.

9. Membranreaktor für Durchflussreaktionen nach einem der Ansprüche 1 bis 8, wobei der Membranreaktor mit einer Temperierungseinheit ausgestattet ist.

10. Membranreaktor für Durchflussreaktionen nach einem der Ansprüche 1 bis 9, wobei der Membranreaktor mit einer Kapillarmesssonde ausgestattet ist, deren Spitze durch eine Fluidleitung in die Fluidkammer oder in einem Kanal eines Verteilerstrukturelements angeordnet werden kann, vorzugsweise ist der Abstand der Spitze der Kapillarmesssonde im Kanal einstellbar in Bezug auf den Abstand zur Membran.

11. Vorrichtung zur Untersuchung von Membranen, die einen Membranreaktor umfasst, der **dadurch gekennzeichnet ist, dass** dieser eine Ausführung aufweist, die in einem der Ansprüche 1 bis 10 genannt ist.

12. Verfahren zur Durchführung von Membranprozessen oder zur Charakterisierung von Membranen, wobei das Verfahren **dadurch gekennzeichnet ist, dass** ein Membranreaktor verwendet wird, der in einem der Ansprüche 1 bis 10 beschrieben ist, oder dass eine Vorrichtung eingesetzt wird, die durch Anspruch 11 beschrieben wird.

13. Verfahren zur Durchführung von Membranprozessen nach Anspruch 12, wobei das Verfahren bei einem Druck in einem Bereich von 0,05 - 300 barg, vorzugsweise in einem Bereich von 0,1 bis 250 barg, durchgeführt wird.

14. Verfahren zur Durchführung von Membranprozessen nach Anspruch 12 oder Anspruch 13, wobei das Verfahren bei einer Temperatur in einem Bereich von -100 bis 1600 °C, vorzugsweise in einem Bereich von 0 bis 1500 °C, darüber hinaus bevorzugt in einem Bereich von 50 bis 1200 °C, durchgeführt wird.

15. Verfahren zur Durchführung von Membranprozessen nach einem der Ansprüche 12 bis 14, wobei die lösbaren Verschlusselemente während des Verfahrens bei einer Temperatur von ≦ 250 °C, vorzugsweise bei einer Temperatur von ≦ 250 °C, gelagert werden.
